# EUROPEAN PATENT SPECIFICATION

(11) **EP 4 318 389 B1**
(45) Date of publication and mention of the grant of the patent: **25.03.2026**
(21) Application number: 22188055.2
(22) Date of filing: 01.08.2022
(51) Int. Cl.: G06T 7/00

(54) **DETERMINING CHARACTERISTICS OF ADIPOSE TISSUE USING ARTIFICIAL NEURAL NETWORK**
BESTIMMUNG VON EIGENSCHAFTEN VON FETTGEWEBE MIT EINEM KÜNSTLICHEN NEURONALEN NETZWERK
DÉTERMINATION DES CARACTÉRISTIQUES DES TISSUS ADIPEUX À L'AIDE D'UN RÉSEAU DE NEURONES ARTIFICIEL

(43) Date of publication of application: 07.02.2024
(73) Proprietor: Siemens Healthineers AG, 91301 Forchheim (DE)
(72) Inventor: Sühling, Michael, 91052 Erlangen (DE); Geiger, Bernhard, Cranbury, 08512 (US); Grbic, Sasa, Plainsboro, 08536 (US); Lades, Felix, 91052 Erlangen (DE); Xu, Zhoubing, Plainsboro, 08536 (US)
(74) Representative: Siemens Healthineers Patent Attorneys

(56) References cited:
- EP-A1- 3 583 902
- WANG YUNZHI ET AL: "Applying a deep learning based CAD scheme to segment and quantify visceral and subcutaneous fat areas from CT images", PROGRESS IN BIOMEDICAL OPTICS AND IMAGING, SPIE - INTERNATIONAL SOCIETY FOR OPTICAL ENGINEERING, BELLINGHAM, WA, US, vol. 10134, 3 March 2017 (2017-03-03), pages 101343G - 101343G, XP060086667, ISSN: 1605-7422, ISBN: 978-1-5106-0027-0, DOI: 10.1117/12.2250360
- LARTAUD PIERRE-JEAN ET AL: "Spectral CT Based Training Dataset Generation and Augmentation for Conventional CT Vascular Segmentation", 10 October 2019, 16TH EUROPEAN CONFERENCE - COMPUTER VISION - ECCV 2020, CORNELL UNIVERSITY LIBRARY, 201 OLIN LIBRARY CORNELL UNIVERSITY ITHACA, NY 14853, PAGE(S) 768 - 775, XP047522677

## Description

Various examples of the disclosure relate to determining at least one characteristic of adipose tissue comprised in an anatomical structure. Various examples of the disclosure specifically relate to determining, by a trained neural network, at least one characteristic of adipose tissue comprised in an anatomical structure based on one or more segmented CT images which depict a contour of the adipose tissue.

Adipose tissue (AT) is commonly known as body fat. It is found all over the body. It can be found under the skin (subcutaneous fat), packed around internal organs (visceral fat), between muscles, within bone marrow and in breast tissue. AT is known to be an important risk factor for the development of the so-called metabolic syndrome, a whole cluster of disorders such as hypertension, cardiovascular disease, and diabetes. It also turned out that AT is an independent predictive factor of survival in COVID-19 patients. It has been shown that the risks associated with various diseases are not only related to the amount of AT, but also appear to be critically dependent on its segmental body distribution. For instance, people with a higher proportion of central fat deposits (visceral fat) are more likely to develop metabolic syndrome than those with a predominantly peripheral fat distribution (subcutaneous fat). Another example of segmental fat effects is the deposition of fat into skeletal muscles which can negatively affect sarcopenia, a loss in skeletal muscle mass and strength.

Beyond the segmental distribution and volume of AT in the body, the functional characterization of AT is also crucial for clinical decision-making. Adipose tissues may comprise white adipose tissue (WAT) and brown adipose tissue (BAT) exhibiting pro-inflammatory and anti-inflammatory characteristics, respectively. In the presence of an infectious or inflammatory process such as appendicitis or diverticulitis, lymphatic vessels within fat become leaky and the water content of adipose tissue increases. Such inflamed fat appears denser, assuming a smoky-grey appearance called fat stranding, e.g., in computed tomography (CT) images. Such fat stranding is often indicative of acute pathologies of adjacent organs.

In current clinical practice, simple anthropometric methods, such as waist-to-hip ratio, waist circumference or sagittal diameter are widely used to assess distribution and/or volume of adipose tissue. However, these methods cannot differentiate segmental fat compartments such as visceral and subcutaneous fat. Further, there exist semi-automatic approaches, based on CT or MR (Magnetic Resonance) measurements of adipose tissues, to extract such segmental fat compartments which are mostly restricted to 2D measurements such as the quantification of visceral and subcutaneous fat in a cross-section at the fourth lumbar vertebra level (L4). In addition, when determining fat stranding, pure visual identification of inflamed/stranded fat by human reading is usually used but such human reading approach is particularly challenging since BAT can be misinterpreted as infiltration of adipose tissue in an inflammatory process.

The publication by WANG YUNZHI ET AL, "Applying a deep learning based CAD scheme to segment and quantify visceral and subcutaneous fat areas from CT images",PROGRESS IN BIOMEDICAL OPTICS AND IMAGING, SPIE - INTERNATIONAL SOCIETY FOR OPTICAL ENGINEERING, BELLINGHAM, WA, US, vol. 10134, 3 March 2017, pages 101343G-1 to 101343G-8, ISSN: 1605-7422, DOI: 10.1117/12.2250360ISBN: 978-1-5106-0027-0, represents background art.

Accordingly, there is a need for advanced techniques which mitigate or overcome the above-identified drawbacks or restrictions. There is a need for advanced techniques of precise, reliable, and automatic assessment of AT, such as determining a type of the AT, a pattern of fat stranding of the AT, and activation or inactivation of the AT.

This need is met by the features of the independent claims. The features of the dependent claims define embodiments.

A computer-implemented method is provided. The method comprises obtaining one or more CT images depicting an anatomical structure comprising adipose tissue. The method further comprises segmenting each one of the one or more CT images such that a contour of the adipose tissue is determined. The method still further comprises determining, based on the one or more segmented CT images, at least one characteristic of the adipose tissue using a trained neural network.

A computing device comprising a processor and a memory is provided. Upon loading and executing program code from the memory, the processor is configured to perform a method. The method comprises obtaining one or more CT images depicting an anatomical structure comprising adipose tissue. The method further comprises segmenting each one of the one or more CT images such that a contour of the adipose tissue is determined. The method still further comprises determining, based on the one or more segmented CT images, at least one characteristic of the adipose tissue using a trained neural network.

A CT scanner comprising a computing device is provided. The computing device comprises a processor and a memory. Upon loading and executing program code from the memory, the processor is configured to perform a method. The method comprises obtaining one or more CT images depicting an anatomical structure comprising adipose tissue. The method further comprises segmenting each one of the one or more CT images such that a contour of the adipose tissue is determined. The method still further comprises determining, based on the one or more segmented CT images, at least one characteristic of the adipose tissue using a trained neural network.

A computer program product or a computer program or a computer-readable storage medium including program code is provided. The program code can be executed by at least one processor. Executing the program code causes the at least one processor to perform a method. The method comprises obtaining one or more CT images depicting an anatomical structure comprising adipose tissue. The method further comprises segmenting each one of the one or more CT images such that a contour of the adipose tissue is determined. The method still further comprises determining, based on the one or more segmented CT images, at least one characteristic of the adipose tissue using a trained neural network.

A computer-implemented method for performing a training of a neural network is provided. The neural network is used for determining at least one characteristic of adipose tissue. The method comprises obtaining one or more training CT images depicting an anatomical structure comprising the adipose tissue. The method further comprises segmenting each one of the one or more training CT images such that a contour of the adipose tissue is determined. The method still further comprises determining, based on the one or more segmented training CT images, at least one predicted characteristic of the adipose tissue using the neural network, and updating parameter values of the neural network based on a comparison between each of the at least one predicted characteristic and a corresponding reference characteristic of the adipose tissue.

A computing device comprising a processor and a memory is provided. Upon loading and executing program code from the memory, the processor is configured to perform a method for performing a training of a neural network. The neural network is used for determining at least one characteristic of adipose tissue. The method comprises obtaining one or more training CT images depicting an anatomical structure comprising the adipose tissue. The method further comprises segmenting each one of the one or more training CT images such that a contour of the adipose tissue is determined. The method still further comprises determining, based on the one or more segmented training CT images, at least one predicted characteristic of the adipose tissue using the neural network, and updating parameter values of the neural network based on a comparison between each of the at least one predicted characteristic and a corresponding reference characteristic of the adipose tissue.

A CT scanner comprising a computing device is provided. The computing device comprises a processor and a memory. Upon loading and executing program code from the memory, the processor is configured to perform a method for performing a training of a neural network. The neural network is used for determining at least one characteristic of adipose tissue. The method comprises obtaining one or more training CT images depicting an anatomical structure comprising the adipose tissue. The method further comprises segmenting each one of the one or more training CT images such that a contour of the adipose tissue is determined. The method still further comprises determining, based on the one or more segmented training CT images, at least one predicted characteristic of the adipose tissue using the neural network, and updating parameter values of the neural network based on a comparison between each of the at least one predicted characteristic and a corresponding reference characteristic of the adipose tissue.

A computer program product or a computer program or a computer-readable storage medium including program code is provided. The program code can be executed by at least one processor. Executing the program code causes the at least one processor to perform a method for performing a training of a neural network. The neural network is used for determining at least one characteristic of adipose tissue. The method comprises obtaining one or more training CT images depicting an anatomical structure comprising the adipose tissue. The method further comprises segmenting each one of the one or more training CT images such that a contour of the adipose tissue is determined. The method still further comprises determining, based on the one or more segmented training CT images, at least one predicted characteristic of the adipose tissue using the neural network, and updating parameter values of the neural network based on a comparison between each of the at least one predicted characteristic and a corresponding reference characteristic of the adipose tissue. It is to be understood that the features mentioned above and those yet to be explained below may be used not only in the respective combinations indicated, but also in other combinations or in isolation without departing from the scope of the invention which is defined by the appended claims.
FIG. 1 schematically illustrates an exemplary geometry of a CT scanner.
FIG. 2 schematically illustrates an exemplary segmented CT image according to various examples.
FIG. 3 schematically illustrates a further exemplary segmented CT image according to various examples.
FIG. 4 is a flowchart of a method according to various examples.
FIG. 5 schematically illustrates an exemplary neural network according to various examples.
FIG. 6 is a flowchart of a method according to various examples.
FIG. 7 is a block diagram of a device according to various examples.

Some examples of the present disclosure generally provide for a plurality of circuits or other electrical devices. All references to the circuits and other electrical devices and the functionality provided by each are not intended to be limited to encompassing only what is illustrated and described herein. While particular labels may be assigned to the various circuits or other electrical devices disclosed, such labels are not intended to limit the scope of operation for the circuits and the other electrical devices. Such circuits and other electrical devices may be combined with each other and/or separated in any manner based on the particular type of electrical implementation that is desired. It is recognized that any circuit or other electrical device disclosed herein may include any number of microcontrollers, a graphics processor unit (GPU), integrated circuits, memory devices (e.g., FLASH, random access memory (RAM), read only memory (ROM), electrically programmable read only memory (EPROM), electrically erasable programmable read only memory (EEPROM), or other suitable variants thereof), and software which co-act with one another to perform operation(s) disclosed herein. In addition, any one or more of the electrical devices may be configured to execute a program code that is embodied in a non-transitory computer readable medium programmed to perform any number of the functions as disclosed.

In the following, embodiments of the invention will be described in detail with reference to the accompanying drawings. It is to be understood that the following description of embodiments is not to be taken in a limiting sense. The scope of the invention is not intended to be limited by the embodiments described hereinafter or by the drawings, which are taken to be illustrative only.

The drawings are to be regarded as being schematic representations and elements illustrated in the drawings are not necessarily shown to scale. Rather, the various elements are represented such that their function and general purpose become apparent to a person skilled in the art. Any connection or coupling between functional blocks, devices, components, or other physical or functional units shown in the drawings or described herein may also be implemented by an indirect connection or coupling. A coupling between components may also be established over a wireless connection. Functional blocks may be implemented in hardware, firmware, software, or a combination thereof.

Various techniques disclosed herein generally relate to determining at least one characteristic of adipose tissue comprised in an anatomical structure. The at least one characteristic of the adipose tissue is determined based on one or more segmented CT images using a trained neural network. For example, the at least one characteristic of the adipose tissue may be determined by feeding the one or more segmented CT images into the trained neural network. The one or more segmented CT images are obtained by segmenting each one of one or more CT images depicting the anatomical structure comprising the adipose tissue such that a contour of the adipose tissue is determined.

For example, it would be possible to determine a classification of at least one characteristic. Here, a discrete set of predefined classes is available and the result is a pointer to one of these predefined classes. For example, the at least one characteristic may comprise a type of the adipose tissue, i.e., an adipocyte type. Adipocyte types may be described by color hues. Adipose tissue has historically been classified into two types, white adipose tissue (WAT) and brown adipose tissue (BAT), which are visibly distinguishable based on tissue color. According to recent studying, the type of the adipose tissue may further comprise two additional adipocyte hues - beige and pink.

In other examples, it would be possible to determine a pattern of fat stranding of the adipose tissue. For example, abdominal fat stranding can produce various appearances in CT images. Whereas mild inflammation may cause a subtle hazy increased attenuation of the fat (ground-glass-like pattern), increasing severity of the inflammation can produce a reticular pattern, with more well-defined linear areas of increased attenuation. A reticulonodular appearance can also be observed frequently in association with neoplastic disease. See: non-patent literature - Thornton, Eavan, et al. "Patterns of fat stranding." AJR-American Journal of Roentgenology 197.1 (2011): W1.

In further examples, it would be possible to determine activation or inactivation of the adipose tissue, in particular, activation or inactivation of BAT. BAT not only dissipates energy but also has a potential capacity to counteract obesity and related metabolic disorders (e.g., insulin resistance and dyslipidemia). BAT is a special type of body fat that is activated when the body surrounding gets cold. The identification and characterization of BAT, activated BAT, and WAT are therefore highly valuable, e.g., for therapeutic targeting. Therefore, it would be helpful to determine not only the volume of BAT but also activated BAT.

As a general rule, the one or more CT images may depict either a 2-D or 3-D anatomical structure of a patient. For example, the one or more CT images may depict a heart, a liver, a whole abdomen, or a part thereof, e.g., a slice of the heart, of the liver, or of the whole abdomen.

As a further general rule, the one or more CT images may be acquired by a conventional (or single-energy) CT scanner which uses a single polychromatic X-ray beam (ranging from 70 to 140kVp (kilovoltage peak) with a standard of 120 kVp) emitted from a single source and received by a single detector. Alternatively, the one or more CT images may be acquired by a spectral CT scanner which can perform "color" x-ray detection. Such a spectral CT scanner may be a dual-energy CT scanner or a multi-energy CT scanner (See: non-patent literature - McCollough, Cynthia H., et al. "Dual-and multi-energy CT: principles, technical approaches, and clinical applications." Radiology 276.3 (2015): 637.).

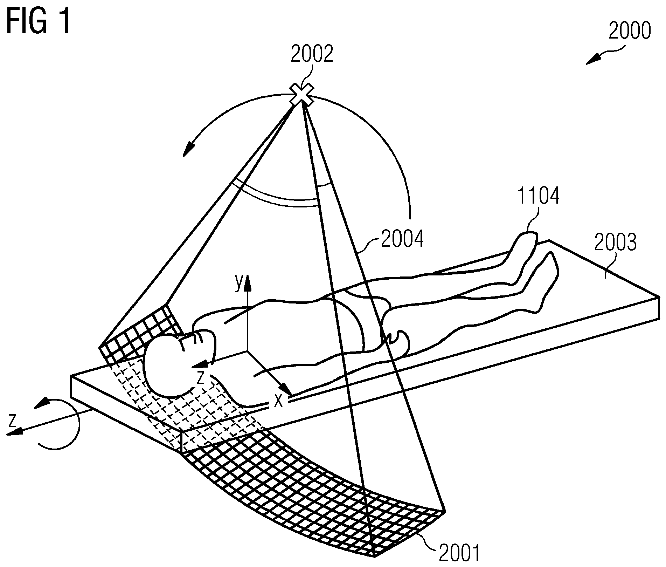

FIG. 1 schematically illustrates an exemplary geometry of a CT scanner 2000, i.e., a conventional CT scanner. The CT scanner 2000 comprises an x-ray tube 2002, a detector array 2001, a patient table 2003. The x-ray tube 2002 may be a cone-beam x-ray tube emitting an x-ray beam 2004 divergent in and covering an appreciable extent in the longitudinal (z) direction. The detector array 2001 may be a curved detector array having multiple rows of detectors. Both the x-ray tube 2002 and the detector array 2001 may be mounted on a C-arm, U-arm, or O-arm gantry depending on clinical applications ranging from image-guided interventions to diagnostic specialties. The CT scanner 2000 may operate with the patient 1104 stationary on the patient table 2003, and the x-ray tube 2002 together with the detector array 2001 rotate once to acquire a volumetric image. Alternatively or optionally, the CT scanner 2000 may operate using helical acquisition - with exquisitely engineered patient table 2003 for longitudinal (z-direction) translation of the patient 1104 during the scan.

According to various examples, to acquire spectral imaging data, the x-ray tube 2002 may be controlled to perform fast tube potential switching to allow alternate projection measurements to be acquired at low and high tube potentials. Alternatively, the x-ray tube 2002 may emit a single high tube potential beam and the detector array 2001 may comprise layered or "sandwich" scintillation detectors. The low-energy data are collected from the front or innermost detector layer and the high-energy data are collected from the back or outermost detector layer. Alternatively, the x-ray tube 2002 may comprise two or more independent x-ray sources and the detector array 2001 may comprise two or more independent data acquisition systems. X-ray emitted by each one of the two or more independent x-ray sources is detected by a corresponding one of the two or more independent data acquisition systems. Alternatively, the detector array 2001 may comprise photon-counting detectors. Such detectors are capable of counting discrete photon interactions. Based on the choice of energy thresholds and the associated energy of each photon, counts are placed into specific energy threshold data sets. Data associated with specific energy windows are created by subtracting different energy threshold data.

As a general rule, the CT scanner 2000 may comprise a computing device (not shown in FIG. 1) embedded in or connected with the CT scanner 2000. The computing device may comprise at least one processor, at least one memory, and at least one input/output (I/O) interface. The at least one processor is configured to load program code from the at least one memory and execute the program code. Upon executing the program code, the at least one processor may control the CT scanner 2000 to acquire CT imaging data, to process the acquired CT imaging data, e.g., filtering, motion correction, reconstruction and so on.

The CT scanner 2000 may be connectable to a database (not shown in FIG. 1), such as a picture archiving and communication system (PACS) located within a local network of a hospital, for storing acquired CT imaging data, and/or reconstructed CT images.

According to this disclosure, after acquiring the CT images depicting an anatomical structure comprising adipose tissue, one or more of the CT images may be applied to a segmentation algorithm known to the skilled person to determine one or more segmented CT images, in which a contour of the adipose tissue is determined. Then, the one or more segmented CT images are applied to a trained artificial neural network (also referred to as a neural network) to determine at least one characteristic of the adipose tissue.

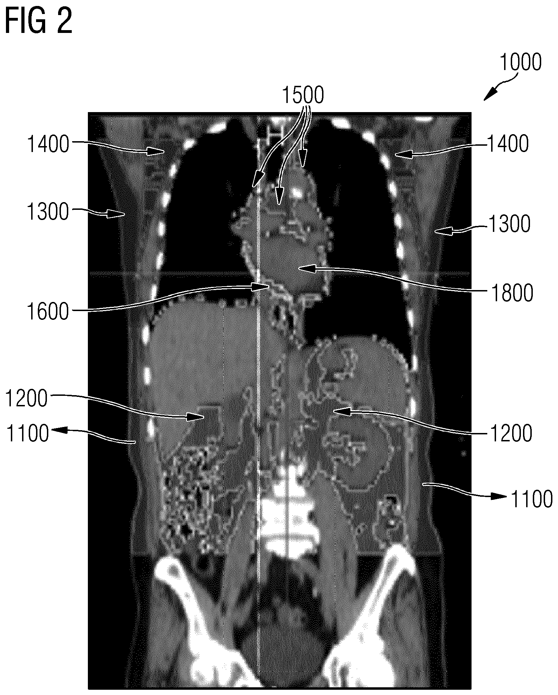

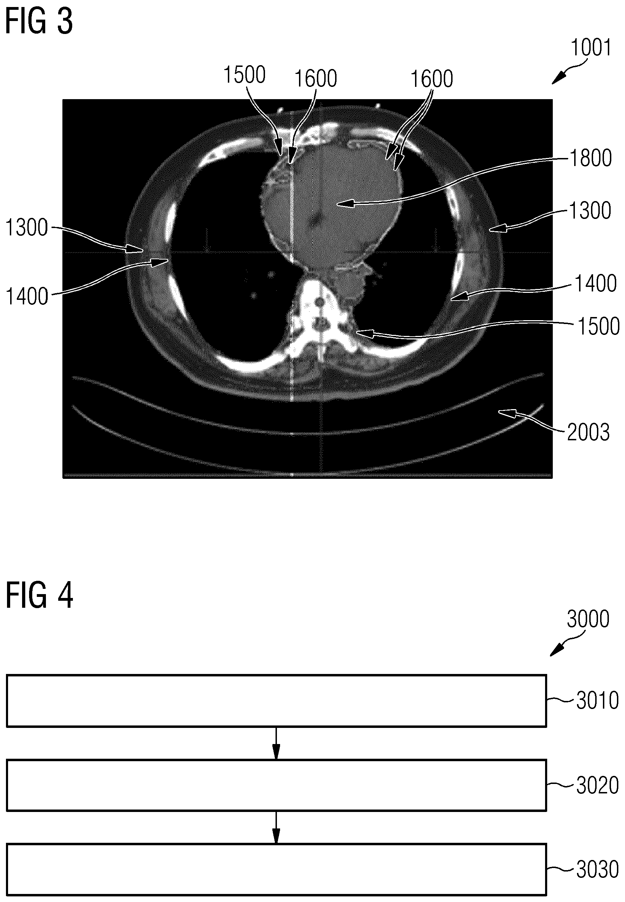

FIG. 2 schematically illustrates an exemplary segmented CT image 1000 according to various examples. The segmented CT image 1000 is a slice of CT image depicting anatomical structure comprising adipose tissue in the x-z plane of FIG. 1, i.e., the abdomen of the patient 1104. In addition, FIG. 3 schematically illustrates a further exemplary segmented CT image 1001 according to various examples. The segmented CT image 1001 is a slice of CT image depicting anatomical structure comprising adipose tissue in the x-y plane of FIG. 1, i.e., the abdomen of the patient 1104. In either FIG. 2 or FIG. 3, the adipose tissue may comprise abdominal subcutaneous fat 1100 (not shown in FIG. 3), abdominal visceral fat 1200 (not shown in FIG. 3), thoracic subcutaneous fat 1300, thoracic extrapericardial fat 1400, mediastinal fat 1500, and epicardial fat 1600. Both the mediastinal fat 1500 and epicardial fat 1600 are located close to a heart 1800.

Hereinafter, either the segmented CT image 1000 of FIG. 2 or the segmented CT image 1001 of FIG. 3 will be used as an example of the anatomical structure comprising adipose tissue to describe various techniques of this disclosure.

FIG. 4 is a flowchart of a method 3000 according to various examples. The method 3000 pertains to determining at least one characteristic of adipose tissue comprised in an anatomical structure, e.g., the abdomen of the patient 1104. The at least one characteristic of the adipose tissue is determined based on one or more segmented CT images, e.g., the segmented CT images 1000 or 1001, using a trained neural network. For example, the at least one characteristic of the adipose tissue may be determined by feeding the one or more segmented CT images into the trained neural network. The one or more segmented CT images are obtained by segmenting each one of one or more CT images depicting the anatomical structure comprising the adipose tissue such that a contour of the adipose tissue is determined.

The method 3000 may be executed by a computing device comprising at least one processor upon loading program code. The computing device may be embedded in or connected with the CT scanner 2000. Details of the method 3000 are described below.

Block 3010: obtaining one or more CT images depicting an anatomical structure comprising adipose tissue. The one or more CT images could be loaded from a PACS or obtained directly from a CT scanner, such as the CT scanner 2000 of FIG. 1. Block 3010 could include controlling a CT scanner to acquire the CT images. The CT images could be loaded from a memory. Alternatively, the CT images may be received directly from a CT scanner during a scan to perform a real-time determination of the at least one characteristic of the adipose tissue.

Optionally or alternatively, the one or more CT images may be obtained based on spectral imaging data associated with the anatomical structure. For example, the spectral imaging data may be acquired using a spectral CT scanner.

Block 3020: segmenting each one of the one or more CT images such that a contour of the adipose tissue is determined. Each one of the one or more CT images may be segmented using a segmentation algorithm known to the skilled person. For example, adipose tissue associated with the heart 1800 of the patient 1104 maybe segmented using techniques disclosed in a non-patent literature - Militello, Carmelo, et al. "A semi-automatic approach for epicardial adipose tissue segmentation and quantification on cardiac CT scans." Computers in biology and medicine 114 (2019): 103424.

According to various examples, when the one or more CT images depict multiple anatomical structures, the anatomical structure may be detected using techniques as disclosed in a non-patent literature - Ghesu, Florin-Cristian, et al. "Multi-scale deep reinforcement learning for real-time 3D-landmark detection in CT scans." IEEE transactions on pattern analysis and machine intelligence 41.1 (2017): 176-189. Then, the anatomical structure may be segmented using techniques as disclosed in a non-patent literature - Yang, Dong, et al. "Automatic liver segmentation using an adversarial image-to-image network." International conference on medical image computing and computer-assisted intervention. Springer, Cham, 2017. See: Kratzke, Lisa, Nilesh Mistry, Christian Möhler, Annie Bruder, Siemens Healthineers, Allison Müller, Thomas Weissmann, Sina Mansoorian, and Florian Putz. "DirectORGANS 2.0." Optionally or additionally, based on the identified anatomical structures, e.g., body, heart, ribs, bowel bag, lungs, and/or aorta, adipose tissue (compartments) 1100, 1200, 1300, 1400, 1500, and/or 1600 could be identified by thresholding, e.g., the interval of -150 HU (Hounsfield unit) to 0 HU.

According to various example, the segmented CT image may comprise at least one of abdominal subcutaneous and/or visceral fat, thoracal subcutaneous, mediastinal and/or pericardial fat, skeletal muscle compartments for intra- and/or peri-muscular adipose tissue, vascular structures for peri-vascular adipose tissue.

Block 3030: determining, based on the one or more segmented CT images, at least one characteristic of the adipose tissue using a trained neural network.

According to various examples, the at least one characteristic of the adipose tissue comprises a type of the adipose tissue, a pattern of fat stranding of the adipose tissue, activation or inactivation of the adipose tissue. For example, the trained neural network may output a single image for each one of the at least one characteristic of the adipose tissue. For example, one image may merely comprise BAT or WAT. Another image may merely comprise fat stranding with a certain pattern. The other image may merely comprise activated BAT. Additionally or alternatively, further images merely depicting a certain characteristic of the adipose tissue may be also determined.

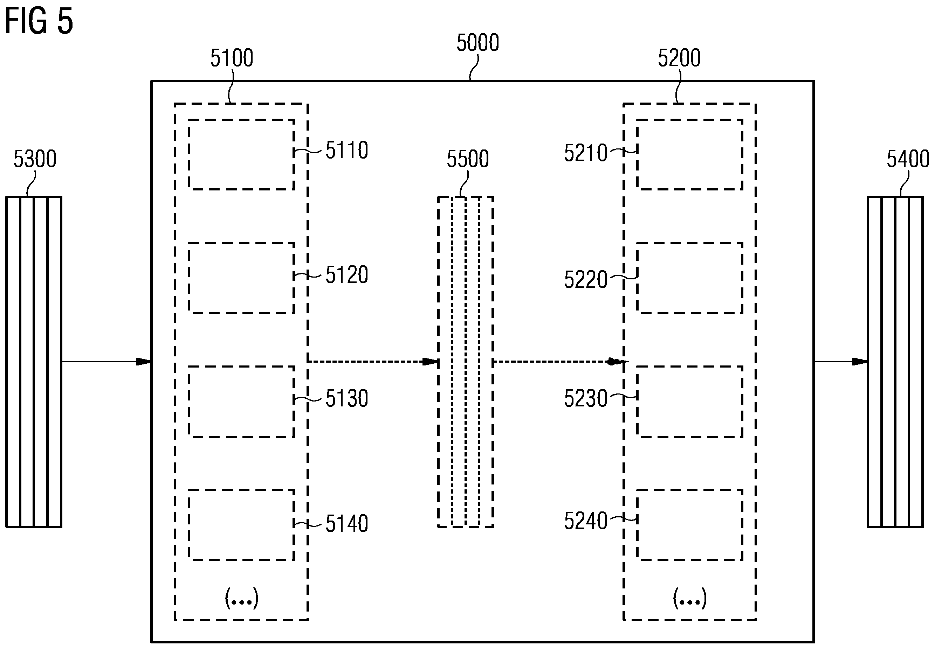

According to various example, the (trained) neural network may have an encoder-decoder structure, such as U-net as disclosed in a non-patent literature - Ronneberger, Olaf, Philipp Fischer, and Thomas Brox. "U-net: Convolutional networks for biomedical image segmentation." International Conference on Medical image computing and computer-assisted intervention. Springer, Cham, 2015. For example, the neural network may be implemented according to the neural network 5000 of FIG. 5.

FIG. 5 schematically illustrates an exemplary neural network 5000 according to various examples. The neural network 5000 may comprise an encoder part 5100 and a decoder part 5200. The encoder part 5100 may be configured to generate features 5500 associated with one or more segmented CT images 5300, and the decoder part 5200 may be configured to generate/determine at least one characteristic 5400 of the adipose tissue based on the features 5500.

When the one or more CT images obtained at block 3010 are acquired based on spectral imaging data associated with the anatomical structure, the method 3000 may further comprises determining, based on the spectral imaging data, at least one material-decomposed image, and the determining of the at least one characteristic of the adipose tissue is further based on the at least one material-decomposed image.

According to various examples, the at least one material-decomposed image may comprise at least one of a non-contrast fat image, a non-contrast water image, a contrast-enhanced iron image, and a contrast-enhanced iodine image. Details with respect to different material-decomposed images will be explained according to the following two scenarios.

### Scenario 1: non-contrast CT images

In case, non-contrast CT (NCCT)images are obtained at block 3010, the following material-decomposed images can be derived:
- non-contrast fat image: a fat-water two-material decomposition can be used to estimate the overall fat concentrations within regions of interest. BAT has a significantly lower fat concentration than WAT which may be reflected also by the fat image.
- non-contrast water image: this material-decomposed image could reflect that BAT has a higher water fraction than WAT. Increased water content may also indicate inflamed fat since microscopic lymphatic vessels within fat become leaky during inflammation.
- Besides the non-contrast fat image and the non-contrast water image, also the original NCCT may serve as input to the trained neural network to also exploit changes in HU values and image texture patterns, e.g., for fat stranding regions. In addition, CT HU values of BAT may be significantly greater under activated conditions than under non-activated conditions.

### Scenario 2: contrast-enhanced CT images

In case, contrast-enhanced CT (CECT) images are obtained at block 3010, the following material-decomposed images can be derived:
- contrast-enhanced iron image: the iron image may reflect the increased iron concentration in BAT.
- contrast-enhanced iodine image: the iodine image can be derived for example from three-material iodine, fat, and soft tissue decomposition. In particular, the iodine image may help to differentiate WAT from BAT that has a higher vascularization compared to WAT. In particular, the amount of increased perfusion/iodine uptake in activated BAT is associated with the degree of BAT activation. Furthermore, increased perfusion and iodine uptake are also observed in surrounding inflamed fat secondary to a primary inflammation (e.g., appendicitis).
- Besides the contrast-enhanced iron image and the contrast-enhanced iodine image, also the original CECT may serves as input to the trained neural network to also exploit changes in the HU values and image texture patterns due to characteristic contrast dynamics of different adipose tissue types.

When at least one material-decomposed image is fed into the trained neural network, e.g., 5000, together with the one or more segmented CT images, the encoder part 5100 of the trained neural network 5000 may comprise multiple encoders 5110, 5120, 5130, and 5140, and at least one decoder, i.e., the decoder part 5200. The determining of the at least one characteristic of the adipose tissue using the trained neural network 5000 may comprise: feeding the one or more segmented CT images and each one of the at least one material-decomposed image to a respective encoder of the multiple encoders 5110, 5120, 5130, and 5140; obtaining respective features associated with the adipose tissue from each of the multiple encoders; concatenating the obtained respective features; and, determining, based on the concatenated features 5500, the at least one characteristic 5400 of the adipose tissue by the at least one decoder.

Optionally or additionally, the decoder part 5200 the trained neural network 5000 may comprise multiple decoders 5210, 5220, 5230, as well as 5240, and each one of the multiple decoders 5210, 5220, 5230, as well as 5240 outputs a distinct characteristic of the adipose tissue. For example, the multiple decoders 5210, 5220, 5230, as well as 5240 may respectively output images merely comprising BAT, WAT, fat stranding, and activated BAT.

Optionally or additionally, the method 3000 may further comprises determining a reference region in the anatomical structure and normalizing a contrast of each one of the one or more segmented CT images based on the reference region. The determining of the at least one characteristic of the adipose tissue is based on the one or more normalized segmented CT images. For example, vascular structures such as the aorta may serve as a reference to standardize/normalize the one or more segmented CT images with respect to, e.g., subject-specific contrast bolus dynamics or variations in kV (kilovoltage) settings during CT acquisition.

By determining at least one characteristic of adipose tissue comprised in an anatomical structure by processing one or more segmented CT images using a trained neural network, adipose tissue can be fully automatically, precisely, and reliably identified, quantified, and characterized (e.g. brown vs. white adipose tissue, fat stranding) from CT images. By further normalizing a contrast of each one of the one or more segmented CT images based on a reference region, inter-subject variations, e.g., with respect to subject-specific contrast bolus dynamics, could be minimized, and thereby the techniques disclosed herein could be standardized and determine more precise and more reliable results. By still further taking advantage of spectral CT, the at least one characteristic of the adipose tissue is determined by taking at least one material-decomposed image into account, and thereby comprehensive adipose tissue characterization can be performed. Further, depending on the scan protocol and resulting CT data (e.g., NCCT or CECT), the input of the neural network may vary. Each input channel would independently go through an encoder to extract relevant context for adipose characterization. The extracted features from each input channel would be concatenated and then go through a decoder to generate the outcome of tissue classification/characterization. Given the independent feature extraction, the entire workflow can still be functional even if some input channels may not be available (e.g., NCCT or CECT) during both training and deployment.

According to various example, before applying the trained neural network 5000 to the one or more segmented CT images to determine at least one characteristic of adipose tissue. The neural network 5000 may be trained by updating trainable parameters and hyperparameters of the neural network 5000.

According to the disclosure, various training methods of neural networks may be applied to train the neural network 5000, such as supervised learning, unsupervised learning, semi-supervised learning, reinforce learning and etc.

In general, the neural network 5000 may be executed by a node of an edge computing system, or by a cloud computing system, or by the CT scanner 2000 of FIG. 1, for example by a computing device embedded into or connected to the CT scanner 2000.

According to the disclosure, the encoder part 5100 and the decoder part 5200 of the neural network 5000 may be trained separately using different sets of training data based on supervised learning techniques. Each training process can include determining a loss value based on a comparison between a prediction of the respective one of the encoder part 5100 and the decoder part 5200 and a ground truth. A loss function can provide the loss value by performing the comparison. Based on the loss value, it is then possible to adjust the weights of the encoder part 5100 and the decoder part 5200, respectively. Here, an optimization algorithm, e.g., gradient descent, can be employed. Backpropagation can be an alternative.

On the other hand, the encoder part 5100 and the decoder part 5200 of the neural network 5000 may be trained jointly, i.e., the two parts may be regarded as a whole, and parameter values of both parts are updated together by using, for example, backpropagation in a joint optimization process based on a common loss value. This corresponds to end-to-end training.

According to various examples, each of the encoder part 5100 and the decoder part 5200 of the neural network 5000 may be trained using different training techniques, respectively. For example, the encoder part 5100 may be trained by using supervised learning, and the decoder part 5200 may be trained by using unsupervised learning.

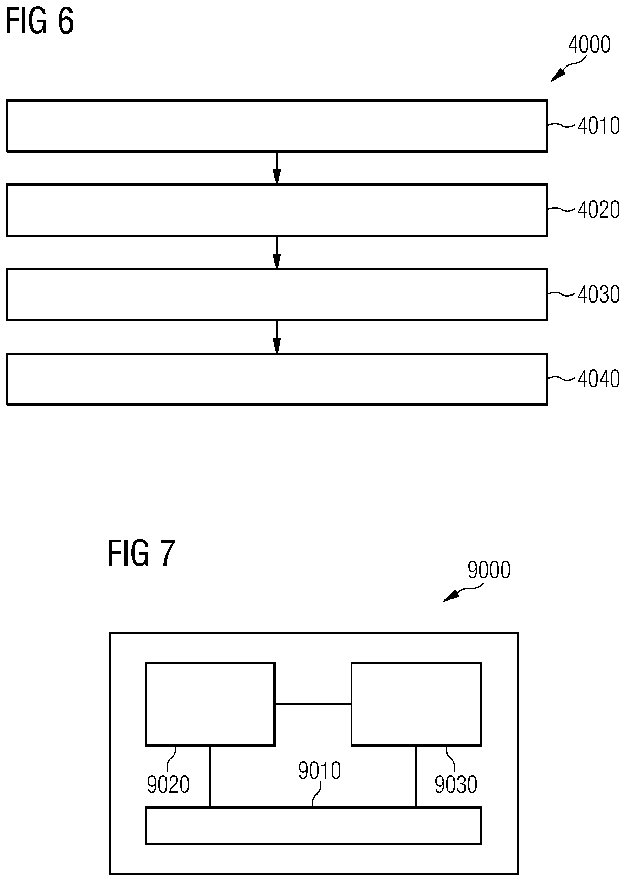

FIG. 6 is a flowchart of a method 4000 according to various examples. The method 4000 pertains to performing a training of the neural network 5000 of FIG. 5. The method 4000 utilizes supervised learning. Details of the method 4000 are described below.

Block 4010: obtaining one or more training CT images depicting an anatomical structure comprising the adipose tissue.

For example, the one or more training CT images may be obtained from a database, such as the PACS.

Block 4020: segmenting each one of the one or more training CT images such that a contour of the adipose tissue is determined.

The same techniques described at block 3020 of FIG. 4 could be applied to at block 4020.

Block 4030: determining, based on the one or more segmented training CT images, at least one predicted characteristic of the adipose tissue using the neural network 5000.

Block 4040: updating parameter values of the neural network 5000 based on a comparison between each of the at least one predicted characteristic and a corresponding reference characteristic of the adipose tissue.

According to various examples, each of the reference characteristics of the adipose tissue is determined based on positron emission tomography, PET, images depicting the anatomical structure comprising the adipose tissue, and/or magnetic resonance, MR, images depicting the anatomical structure comprising the adipose tissue. Since adipose tissues are highly metabolically active, fluoroDeoxyGlucose (FDG) PET/CT data may be well suited as a reference. For example, the standardized uptake value uptake of BAT is significantly higher compared to WAT. Controlled activation of BAT by means of, e.g., a temperature-controlled room or pharmacological stimulation that varies across follow-up PET/CT scans of a subject, allows to generate reference values for different BAT activation levels of the same subject. Besides FDG PET/CT, Magnetic Resonance Imaging (MRI) can assess brown adipose tissue (BAT) structure and function serving as another possible reference for training. Regarding the reference for inflamed/stranded fat, such regions can be annotated by expert Radiologists based on, e.g., confirmed primary organ inflammations.

According to various examples, the PET images can be obtained together with the training CT images using a PET/CT scanner.

Similar to the method 3000 of FIG. 4, the method 4000 may further comprise determining a reference region in the anatomical structure, and normalizing a contrast of each one of the one or more segmented training CT images based on the reference region. The determining of the at least one predicted characteristic of the adipose tissue is based on the one or more normalized segmented training CT images.

According to various examples, the one or more training CT images may be obtained based on spectral imaging data associated with the anatomical structure. For example, the spectral imaging data may be acquired using a spectral CT scanner.

Optionally or additionally, the method 4000 may further comprise determining, based on the spectral imaging data, at least one material-decomposed image and the determining of the at least one predicted characteristic of the adipose tissue may be further based on the at least one material-decomposed image.

According to various examples, the at least one material-decomposed image may comprise at least one of a non-contrast fat image, a non-contrast water image, a contrast-enhanced iron image, and a contrast-enhanced iodine image.

FIG. 7 is a block diagram of a computing device 9000 according to various examples. The computing device 9000 may comprise a processor 9020, a memory 9030, and an input/output interface 9010. The processor 9020 is configured to load program code from the memory 9030 and execute the program code. Upon executing the program code, the processor 9020 performs the method 3000 for determining at least one characteristic of adipose tissue comprised in an anatomical structure and/or the method 4000 for performing a training of the neural network 5000.

Referring to FIG. 1 again, the CT scanner 2000 may further comprise the computing device 9000 configured to perform the method 3000 and/or the method 4000. The computing device 9000 may be embedded in or connected with the CT scanner 2000, and thereby the CT scanner 100 may be also configured to perform the method 3000 and/or the method 4000.

Summarizing, techniques have been described that facilitate fully automatic, precise, and reliable identification, quantification, and/or characterization of adipose tissue based on CT images. By further normalizing a contrast of each one of the one or more segmented CT images based on a reference region, inter-subject variations, e.g., with respect to subject-specific contrast bolus dynamics, could be minimized, and thereby the techniques disclosed herein could be standardized and determine more precise and more reliable results. By still further taking advantage of spectral CT, the at least one characteristic of the adipose tissue is determined by taking at least one material-decomposed image into account, and thereby comprehensive adipose tissue characterization can be performed. Further, depending on the scan protocol and resulting CT data (e.g., NCCT or CECT), the input of the neural network may vary. Each input channel would independently go through an encoder to extract relevant context for adipose characterization. The extracted features from each input channel would be concatenated and then go through a decoder to generate the outcome of tissue classification/characterization. Given the independent feature extraction, the entire workflow can still be functional even if some input channels may not be available (e.g., NCCT or CECT) during both training and deployment.

Although the disclosure has been shown and described with respect to certain preferred embodiments, equivalents and modifications will occur to others skilled in the art upon the reading and understanding of the specification. The present disclosure includes all such equivalents and modifications and is limited only by the scope of the appended claims.

For illustration, the disclosure is explained in detail based on 2-D CT images. The techniques disclosed herein can be also applied to 3-D CT images. For example, one or more CT images comprising multiple voxels may be processed by the techniques disclosed herein to determine at least one characteristic of adipose tissue comprised in a segment of the human body, e.g., a segment of the abdomen.

Further, the techniques disclosed herein can be also respectively applied to CT images depicting different slices or segments of a human body, and thereby at least one characteristic of adipose tissue of the whole body could be determined.

## Claims

1. A computer-implemented method (3000), comprising:
- obtaining (3010) one or more computed tomography, CT, images depicting an anatomical structure comprising adipose tissue (1100, 1200, 1300, 1400, 1500, 1600), ;
- segmenting (3020) each one of the one or more CT images such that a contour of the adipose tissue (1100, 1200, 1300, 1400, 1500, 1600) is determined;
- determining (3030), based on the one or more segmented CT images (1000, 1001, 5300), at least one characteristic (5400) of the adipose tissue (1100, 1200, 1300, 1400, 1500, 1600) using a trained neural network (5000),
**characterized in that**
- the one or more CT images are obtained based on spectral imaging data associated with the anatomical structure,
- the method further comprises determining, based on the spectral imaging data, at least one material-decomposed image, wherein said determining of the at least one characteristic (5400) of the adipose tissue (1100, 1200, 1300, 1400, 1500, 1600) is further based on the at least one material-decomposed image,
- the at least one characteristic (5400) of the adipose tissue (1100, 1200, 1300, 1400, 1500, 1600) comprises a type of the adipose tissue (1100, 1200, 1300, 1400, 1500, 1600), wherein the type of adipose tissue is white adipose tissue (WAT) or brown adipose tissue (BAT), a pattern of fat stranding of the adipose tissue (1100, 1200, 1300, 1400, 1500, 1600), activation or inactivation of the adipose tissue (1100, 1200, 1300, 1400, 1500, 1600).

2. The computer-implemented method (3000) of claim 1, further comprising:
- determining a reference region in the anatomical structure;
- normalizing a contrast of each one of the one or more segmented CT images (1000, 1001, 5300) based on the reference region;
wherein said determining of the at least one characteristic (5400) of the adipose tissue (1100, 1200, 1300, 1400, 1500, 1600) is based on the one or more normalized segmented CT images.

3. The computer-implemented method (3000) of claim 1, wherein the at least one material-decomposed image comprises at least one of a non-contrast fat image, a non-contrast water image, a contrast-enhanced iron image, and a contrast-enhanced iodine image.

4. The computer-implemented method (3000) of any one of claim 1 or 3, wherein the trained neural network (5000) comprises multiple encoders (5110, 5120, 5130, 5140) and at least one decoder (5210, 5220, 5230, 5240),
said determining of the at least one characteristic (5400) of the adipose tissue (1100, 1200, 1300, 1400, 1500, 1600) using the trained neural network (5000) comprising:
- feeding the one or more segmented CT images (1000, 1001, 5300) and each one of the at least one material-decomposed image to a respective encoder (5110, 5120, 5130, 5140) of the multiple encoders (5110, 5120, 5130, 5140);
- obtaining respective features (5500) associated with the adipose tissue (1100, 1200, 1300, 1400, 1500, 1600) from each of the multiple encoders (5110, 5120, 5130, 5140);
- concatenating the obtained respective features (5500); and,
- determining, based on the concatenated features (5500), the at least one characteristic (5400) of the adipose tissue (1100, 1200, 1300, 1400, 1500, 1600) by the at least one decoder (5210, 5220, 5230, 5240).

5. The computer-implemented method (3000) of claim 4, wherein the trained neural network (5000) comprises multiple decoders (5210, 5220, 5230, 5240) and each one of the multiple decoders (5210, 5220, 5230, 5240) outputs a distinct characteristic (5400) of the adipose tissue (1100, 1200, 1300, 1400, 1500, 1600).

6. A computer-implemented method (4000) for performing a training of a neural network (5000) for determining at least one characteristic (5400) of adipose tissue (1100, 1200, 1300, 1400, 1500, 1600), the method comprising:
- obtaining (4010) one or more training CT images depicting an anatomical structure comprising the adipose tissue (1100, 1200, 1300, 1400, 1500, 1600);
- segmenting (4020) each one of the one or more training CT images such that a contour of the adipose tissue (1100, 1200, 1300, 1400, 1500, 1600) is determined;
- determining (4030), based on the one or more segmented training CT images (1000, 1001, 5300), at least one predicted characteristic (5400) of the adipose tissue (1100, 1200, 1300, 1400, 1500, 1600) using the neural network (5000); and
- updating (4040) parameter values of the neural network (5000) based on a comparison between each of the at least one predicted characteristic (5400) and a corresponding reference characteristic (5400) of the adipose tissue (1100, 1200, 1300, 1400, 1500, 1600), **characterized in that**
- the one or more training CT images are obtained based on spectral imaging data associated with the anatomical structure,
- the method further comprises determining, based on the spectral imaging data, at least one material-decomposed image, wherein said determining of the at least one predicted characteristic (5400) of the adipose tissue (1100, 1200, 1300, 1400, 1500, 1600) is further based on at least one material-decomposed image,
- the at least one characteristic (5400) of the adipose tissue (1100, 1200, 1300, 1400, 1500, 1600) comprises a type of the adipose tissue (1100, 1200, 1300, 1400, 1500, 1600), wherein the type of adipose tissue is white adipose tissue (WAT) or brown adipose tissue (BAT), a pattern of fat stranding of the adipose tissue (1100, 1200, 1300, 1400, 1500, 1600), activation or inactivation of the adipose tissue (1100, 1200, 1300, 1400, 1500, 1600).

7. The computer-implemented method (4000) of claim 6, wherein each of the reference characteristics (5400) of the adipose tissue (1100, 1200, 1300, 1400, 1500, 1600) is determined based on positron emission tomography, PET, images depicting the anatomical structure comprising the adipose tissue (1100, 1200, 1300, 1400, 1500, 1600), and/or magnetic resonance, MR, images depicting the anatomical structure comprising the adipose tissue (1100, 1200, 1300, 1400, 1500, 1600).

8. The computer-implemented method (4000) of claim 6 or 7, further comprising:
- determining a reference region in the anatomical structure;
- normalizing a contrast of each one of the one or more segmented training CT images (1000, 1001, 5300) based on the reference region;
wherein said determining of the at least one predicted characteristic (5400) of the adipose tissue (1100, 1200, 1300, 1400, 1500, 1600) is based on the one or more normalized segmented training CT images.

9. The computer-implemented method (4000) of claim 6, wherein the at least one material-decomposed image comprises at least one of a non-contrast fat image, a non-contrast water image, a contrast-enhanced iron image, and a contrast-enhanced iodine image.

10. A computing device (9000), the device comprising a processor (9020) and a memory (9030), wherein upon loading and executing program code from the memory (9030), the processor (9020) is configured to perform the method (3000, 4000) of any one of the preceding claims.

11. A computer program product including program code is provided, wherein the program code can be executed by at least one processor and wherein executing the program code causes the at least one processor to perform a method of any one of the claims 1 to 9.

12. A computer-readable storage medium including program code is provided, wherein the program code can be executed by at least one processor and wherein executing the program code causes the at least one processor to perform a method of any one of the claims 1 to 9.

## Patentansprüche

1. Computerimplementiertes Verfahren (3000), umfassend:
- Erhalten (3010) eines oder mehrerer Computertomographie-Bilder, CT-Bilder, die eine anatomische Struktur darstellen, die Fettgewebe (1100, 1200, 1300, 1400, 1500, 1600) umfasst;
- Segmentieren (3020) jedes des einen oder der mehreren CT-Bilder, so dass eine Kontur des Fettgewebes (1100, 1200, 1300, 1400, 1500, 1600) bestimmt wird;
- Bestimmen (3030) mindestens einer Eigenschaft (5400) des Fettgewebes (1100, 1200, 1300, 1400, 1500, 1600) basierend auf dem einen oder den mehreren segmentierten CT-Bildern (1000, 1001, 5300) unter Verwendung eines trainierten neuronalen Netzwerks (5000),
**dadurch gekennzeichnet, dass**
- das eine oder die mehreren CT-Bilder basierend auf spektralen Bildgebungsdaten erhalten werden, die mit der anatomischen Struktur assoziiert sind,
- das Verfahren ferner Bestimmen mindestens eines Materialzerlegungsbildes basierend auf den spektralen Bildgebungsdaten umfasst, wobei das Bestimmen der mindestens einen Eigenschaft (5400) des Fettgewebes (1100, 1200, 1300, 1400, 1500, 1600) ferner auf dem mindestens einen Materialzerlegungsbild basiert,
- die mindestens eine Eigenschaft (5400) des Fettgewebes (1100, 1200, 1300, 1400, 1500, 1600) einen Typ des Fettgewebes (1100, 1200, 1300, 1400, 1500, 1600), wobei es sich bei dem Typ von Fettgewebe um weißes Fettgewebe (WAT) oder braunes Fettgewebe (BAT) handelt, ein Fettstranding-Muster des Fettgewebes (1100, 1200, 1300, 1400, 1500, 1600), Aktivierung oder Inaktivierung des Fettgewebes (1100, 1200, 1300, 1400, 1500, 1600) umfasst.

2. Computerimplementiertes Verfahren (3000) nach Anspruch 1, ferner umfassend:
- Bestimmen einer Referenzregion in der anatomischen Struktur;
- Normalisieren eines Kontrasts jedes des einen oder der mehreren segmentierten CT-Bilder (1000, 1001, 5300) basierend auf der Referenzregion;
wobei das Bestimmen der mindestens einen Eigenschaft (5400) des Fettgewebes (1100, 1200, 1300, 1400, 1500, 1600) auf dem einen oder den mehreren normalisierten segmentierten CT-Bildern basiert.

3. Computerimplementiertes Verfahren (3000) nach Anspruch 1, wobei das mindestens eine Materialzerlegungsbild mindestens eines von einem kontrastfreien Fettbild, einem kontrastfreien Wasserbild, einem kontrastverstärkten Eisenbild und einem kontrastverstärkten Jodbild umfasst.

4. Computerimplementiertes Verfahren (3000) nach einem der Ansprüche 1 oder 3, wobei das trainierte neuronale Netzwerk (5000) mehrere Codierer (5110, 5120, 5130, 5140) und mindestens einen Decodierer (5210, 5220, 5230, 5240) umfasst,
wobei das Bestimmen der mindestens einen Eigenschaft (5400) des Fettgewebes (1100, 1200, 1300, 1400, 1500, 1600) unter Verwendung des trainierten neuronalen Netzwerks (5000) Folgendes umfasst:
- Eingeben des einen oder der mehreren segmentierten CT-Bilder (1000, 1001, 5300) und jedes des mindestens einen Materialzerlegungsbildes in einen jeweiligen Codierer (5110, 5120, 5130, 5140) der mehreren Codierer (5110, 5120, 5130, 5140);
- Erhalten jeweiliger Merkmale (5500), die mit dem Fettgewebe (1100, 1200, 1300, 1400, 1500, 1600) assoziiert sind, von jedem der mehreren Codierer (5110, 5120, 5130, 5140);
- Verketten der erhaltenen jeweiligen Merkmale (5500); und
- Bestimmen der mindestens einen Eigenschaft (5400) des Fettgewebes (1100, 1200, 1300, 1400, 1500, 1600) durch den mindestens einen Decodierer (5210, 5220, 5230, 5240) basierend auf den verketteten Merkmalen (5500).

5. Computerimplementiertes Verfahren (3000) nach Anspruch 4, wobei das trainierte neuronale Netzwerk (5000) mehrere Decodierer (5210, 5220, 5230, 5240) umfasst und jeder der mehreren Decodierer (5210, 5220, 5230, 5240) eine verschiedene Charakteristik (5400) des Fettgewebes (1100, 1200, 1300, 1400, 1500, 1600) ausgibt.

6. Computerimplementiertes Verfahren (4000) zur Durchführung eines Trainings eines neuronalen Netzwerks (5000) zum Bestimmen mindestens einer Eigenschaft (5400) von Fettgewebe (1100, 1200, 1300, 1400, 1500, 1600), wobei das Verfahren Folgendes umfasst:
- Erhalten (4010) eines oder mehrerer Trainings-CT-Bilder, die eine anatomische Struktur darstellen, die das Fettgewebe (1100, 1200, 1300, 1400, 1500, 1600) umfasst;
- Segmentieren (4020) jedes des einen oder der mehreren Trainings-CT-Bilder, so dass eine Kontur des Fettgewebes (1100, 1200, 1300, 1400, 1500, 1600) bestimmt wird;
- Bestimmen (4030) mindestens einer vorhergesagten Eigenschaft (5400) des Fettgewebes (1100, 1200, 1300, 1400, 1500, 1600) basierend auf dem einen oder den mehreren segmentierten Trainings-CT-Bildern (1000, 1001, 5300) unter Verwendung des trainierten neuronalen Netzwerks (5000); und
- Aktualisieren (4040) von Parameterwerten des neuronalen Netzwerks (5000) basierend auf einem Vergleich zwischen jeder der mindestens einen vorhergesagten Eigenschaft (5400) und einer entsprechenden Referenzeigenschaft (5400) des Fettgewebes (1100, 1200, 1300, 1400, 1500, 1600),
**dadurch gekennzeichnet, dass**
- das eine oder die mehreren Trainings-CT-Bilder basierend auf spektralen Bildgebungsdaten erhalten werden, die mit der anatomischen Struktur assoziiert sind,
- das Verfahren ferner Bestimmen mindestens eines Materialzerlegungsbildes basierend auf den spektralen Bildgebungsdaten umfasst, wobei das Bestimmen der mindestens einen vorhergesagten Eigenschaft (5400) des Fettgewebes (1100, 1200, 1300, 1400, 1500, 1600) ferner auf mindestens einem Materialzerlegungsbild basiert,
- die mindestens eine Eigenschaft (5400) des Fettgewebes (1100, 1200, 1300, 1400, 1500, 1600) einen Typ des Fettgewebes (1100, 1200, 1300, 1400, 1500, 1600), wobei es sich bei dem Typ von Fettgewebe um weißes Fettgewebe (WAT) oder braunes Fettgewebe (BAT) handelt, ein Fettstranding-Muster des Fettgewebes (1100, 1200, 1300, 1400, 1500, 1600), Aktivierung oder Inaktivierung des Fettgewebes (1100, 1200, 1300, 1400, 1500, 1600) umfasst.

7. Computerimplementiertes Verfahren (4000) nach Anspruch 6, wobei jede der Referenzeigenschaften (5400) des Fettgewebes (1100, 1200, 1300, 1400, 1500, 1600) basierend auf Positronen-Emissions-Tomographie-Bildern, PET-Bildern, die die anatomische Struktur darstellen, die das Fettgewebe (1100, 1200, 1300, 1400, 1500, 1600) umfasst, und/oder Magnetresonanzbildern, MR-Bildern, bestimmt wird, die die anatomische Struktur darstellen, die das Fettgewebe (1100, 1200, 1300, 1400, 1500, 1600) umfasst.

8. Computerimplementiertes Verfahren (4000) nach Anspruch 6 oder 7, ferner umfassend:
- Bestimmen einer Referenzregion in der anatomischen Struktur;
- Normalisieren eines Kontrasts jedes des einen oder der mehreren segmentierten Trainings-CT-Bilder (1000, 1001, 5300) basierend auf der Referenzregion;
wobei das Bestimmen der mindestens einen vorhergesagten Eigenschaft (5400) des Fettgewebes (1100, 1200, 1300, 1400, 1500, 1600) auf dem einen oder den mehreren normalisierten segmentierten Trainings-CT-Bildern basiert.

9. Computerimplementiertes Verfahren (4000) nach Anspruch 6, wobei das mindestens eine Materialzerlegungsbild mindestens eines von einem kontrastfreien Fettbild, einem kontrastfreien Wasserbild, einem kontrastverstärkten Eisenbild und einem kontrastverstärkten Jodbild umfasst.

10. Computervorrichtung (9000), wobei die Vorrichtung einen Prozessor (9020) und einen Speicher (9030) umfasst, wobei der Prozessor (9020) nach dem Laden und Ausführen von Programmcode aus dem Speicher (9030) dazu ausgebildet ist, das Verfahren (3000, 4000) nach einem der vorhergehenden Ansprüche durchzuführen.

11. Ein Computerprogrammprodukt ist vorgesehen, das Programmcode beinhaltet, wobei der Programmcode von mindestens einem Prozessor ausgeführt werden kann und wobei das Ausführen des Programmcodes den mindestens einen Prozessor veranlasst, ein Verfahren nach einem der Ansprüche 1 bis 9 durchzuführen.

12. Ein computerlesbares Speichermedium ist vorgesehen, das Programmcode beinhaltet, wobei der Programmcode von mindestens einem Prozessor ausgeführt werden kann und wobei das Ausführen des Programmcodes den mindestens einen Prozessor veranlasst, ein Verfahren nach einem der Ansprüche 1 bis 9 durchzuführen.

## Revendications

1. Un procédé (3000) mis en œuvre par ordinateur, comprenant :
- obtenir (3010) une ou plusieurs images de tomodensitométrie assistée par ordinateur, CT, représentant une structure anatomique comprenant du tissu (1100, 1200, 1300, 1400, 1500, 1600) adipeux ;
- segmenter (3020) chacune de la une ou des plusieurs images CT, de manière à déterminer un contour du tissu (1100, 1200, 1300, 1400, 1500, 1600) adipeux ;
- déterminer (3030), sur la base de la une ou des plusieurs images (1000, 1001, 5300) CT segmentées, au moins une caractéristique (5400) du tissu (1100, 1200, 1300, 1400, 1500, 1600) adipeux, en utilisant un réseau (5000) neuronal entraîné,
**caractérisé en ce que**
- la une ou les plusieurs images CT sont obtenues sur la base d'une donnée d'imagerie spectrale associée à la structure anatomique,
- le procédé comprend en outre déterminer, sur la base de la donnée d'imagerie spectrale, au moins une image décomposée en matériau, dans lequel ladite détermination de la au moins une caractéristique (5400) du tissu (1100, 1200, 1300, 1400, 1500, 1600) adipeux repose en outre sur la au moins une image décomposée en matériau,
- la au moins une caractéristique (5400) du tissu (1100, 1200, 1300, 1400, 1500, 1600) adipeux comprend un type du tissu (1100, 1200, 1300, 1400, 1500, 1600) adipeux, dans lequel le type de tissu adipeux est du tissu (WAT) adipeux blanc ou du tissu (BAT) adipeux brun, une configuration d'infiltration graisseuse du tissu (1100, 1200, 1300, 1400, 1500, 1600) adipeux, une activation ou une inactivation du tissu (1100, 1200, 1300, 1400, 1500, 1600) adipeux.

2. Le procédé (3000) mis en œuvre par ordinateur de la revendication 1, comprenant en outre :
- déterminer une région de référence dans la structure anatomique ;
- normer un contraste de chacune de la une ou des plusieurs images (1000, 1001, 5300) CT segmentées sur la base de la région de référence ;
dans lequel ladite détermination de la au moins une caractéristique (5400) du tissu (1100, 1200, 1300, 1400, 1500, 1600) adipeux repose sur la une ou les plusieurs images CT segmentées normées.

3. Le procédé (3000) mis en œuvre par ordinateur de la revendication 1, dans lequel la au moins une image décomposée en matériau comprend au moins l'une d'une image de graisse sans contraste, d'une image d'eau sans contraste, d'une image de fer à contraste augmenté et d'une image d'iode à contraste augmenté.

4. Le procédé (3000) mis en œuvre par ordinateur de l'une quelconque des revendications 1 ou 3, dans lequel le réseau (5000) neuronal entraîné comprend de multiples codeurs (5110, 5120, 5130, 5140) et au moins un décodeur (5210, 5220, 5230, 5240),
ladite détermination de la au moins une caractéristique (5400) du tissu (1100, 1200, 1300, 1400, 1500, 1600) adipeux utilisant le réseau (5000) neuronal entraîné comprend :
- charger la une ou les plusieurs images (1000, 1001, 5300) CT segmentées et chacune de la au moins une image décomposée en matériau dans un codeur (5110, 5120, 5130, 5140) respectif des multiples codeurs (5110, 5120, 5130, 5140) ;
- obtenir des détails (5500) respectifs associés au tissu (1100, 1200, 1300, 1400, 1500, 1600) adipeux à partir de chacun des multiples codeurs (5110, 5120, 5130, 5140) ;
- concaténer les détails (5500) respectifs obtenus ; et
- déterminer, sur la base des détails (5500) concaténés, la au moins une caractéristique (5400) du tissu (1100, 1200, 1300, 1400, 1500, 1600) adipeux par le au moins un codeur (5210, 5220, 5230, 5240).

5. Le procédé (3000) mis en œuvre par ordinateur de la revendication 4, dans lequel le réseau (5000) neuronal entraîné comprend de multiples décodeurs (5210, 5220, 5230, 5240) et chacun des multiples décodeurs (5210, 5220, 5230, 5240) sort une caractéristique (5400) distincte du tissu (1100, 1200, 1300, 1400, 1500, 1600) adipeux.

6. Un procédé (4000) mis en œuvre par ordinateur pour effectuer un entraînement d'un réseau (5000) neuronal afin de déterminer au moins une caractéristique (5400) de tissu (1100, 1200, 1300, 1400, 1500, 1600) adipeux, le procédé comprenant :
- obtenir (4010) une ou plusieurs images CT d'entraînement représentant une structure anatomique comprenant le tissu (1100, 1200, 1300, 1400, 1500, 1600) adipeux ;
- segmenter (4020) chacune de la une ou des plusieurs images CT d'entraînement, de manière à déterminer un contour du tissu (1100, 1200, 1300, 1400, 1500, 1600) adipeux ;
- déterminer (4030), sur la base de la une ou des plusieurs images (1000, 1001, 5300) CT d'entraînement segmentées, au moins une caractéristique (5400) prédite du tissu (1100, 1200, 1300, 1400, 1500, 1600) adipeux en utilisant le réseau (5000) neuronal ; et
- mettre à jour (4040) des valeurs de paramètre du réseau (5000) neuronal sur la base d'une comparaison entre chacune de la au moins une caractéristique (5400) prédite et une caractéristique (5400) correspondante de référence du tissu (1100, 1200, 1300, 1400, 1500, 1600) adipeux, **caractérisé en ce que**
- la une ou les plusieurs images CT d'entraînement sont obtenues sur la base d'une donnée d'imagerie spectrale associée à la structure anatomique,
- le procédé comprend en outre déterminer, sur la base de la donnée d'imagerie spectrale, au moins une image décomposée en matériau, dans lequel ladite détermination de la au moins une caractéristique (5400) prédite du tissu (1100, 1200, 1300, 1400, 1500, 1600) adipeux repose en outre sur au moins une image décomposée en matériau,
- la au moins une caractéristique (5400) du tissu (1100, 1200, 1300, 1400, 1500, 1600) adipeux comprend un type du tissu (1100, 1200, 1300, 1400, 1500, 1600) adipeux, dans lequel le type de tissu adipeux et du tissu (WAT) adipeux blanc ou du tissu (BAT) adipeux brun, une configuration d'infiltration graisseuse du tissu (1100, 1200, 1300, 1400, 1500, 1600) adipeux, une activation ou une inactivation du tissu (1100, 1200, 1300, 1400, 1500, 1600) adipeux.

7. Le procédé (4000) mis en œuvre par ordinateur de la revendication 6, dans lequel chacune des caractéristiques (5400) de référence du tissu (1100, 1200, 1300, 1400, 1500, 1600) adipeux est déterminée sur la base d'images de tomodensitométrie à émission de positrons, PET, représentant la structure anatomique comprenant le tissu (1100, 1200, 1300, 1400, 1500, 1600) adipeux, et/ou d'images de résonance magnétique, RM, représentant la structure anatomique comprenant le tissu (1100, 1200, 1300, 1400, 1500, 1600) .

8. Le procédé (4000) mis en œuvre par ordinateur de la revendication 6 ou 7, comprenant en outre :
- déterminer une région de référence dans la structure anatomique ;
- normer un contraste de chacune de la une ou des plusieurs images (1000, 1001, 5300) CT segmentées sur la base de la région de référence ;
dans lequel ladite détermination de la au moins une caractéristique (5400) du tissu (1100, 1200, 1300, 1400, 1500, 1600) adipeux repose sur la une ou les plusieurs images CT segmentées normées.

9. Le procédé (4000) mis en œuvre par ordinateur de la revendication 6, dans lequel la au moins une image décomposée en matériau comprend au moins l'une d'une image de graisse sans contraste, d'une image d'eau sans contraste, d'une image de fer à contraste augmenté et d'une image d'iode à contraste augmenté.

10. Un dispositif (9000) informatique, le dispositif comprenant un processeur (9020) et une mémoire (9030), dans lequel, après chargement à exécution d'un code de programme de la mémoire (9030), le processeur (9020) est configuré pour effectuer le procédé (3000, 4000) de l'une quelconque des revendications précédentes.

11. Il est prévu un produit de programme d'ordinateur comprenant un code de programme, dans lequel le code de programme peut être exécuté par au moins un processeur, et dans lequel exécuter le code de programme fait que le au moins un processeur effectue un procédé suivant l'une quelconque des revendications 1 à 9.

12. Il est prévu un support de mémoire déchiffrable par ordinateur comprenant un code de programme, dans lequel le code de programme peut être exécuté par au moins un processeur, et dans lequel exécuter le code de programme fait que le au moins un processeur effectue un procédé de l'une quelconque des revendications 1 à 9.
